# Europäisches Patentamt
# European Patent Office
# Office européen des brevets

(19)

(11) Veröffentlichungsnummer: **0 096 907**
**B1**

(12) **EUROPÄISCHE PATENTSCHRIFT**

(45) Veröffentlichungstag der Patentschrift:
13.08.86

(51) Int. Cl.⁴: **B 01 D 53/14**, C 01 B 3/52,
C 10 K 1/14

(21) Anmeldenummer: **83200665.4**

(22) Anmeldetag: **09.05.83**

(54) **Verfahren zum Regenerieren von Absorptionslösungen für schwefelhaltige Gase.**

(30) Priorität: **16.06.82 DE 3222588**

(43) Veröffentlichungstag der Anmeldung:
**28.12.83 Patentblatt 83/52**

(45) Bekanntmachung des Hinweises auf die Patenterteilung:
**13.08.86 Patentblatt 86/33**

(84) Benannte Vertragsstaaten:
**BE DE FR GB IT NL**

(56) Entgegenhaltungen:
**DE-A-1 914 810**
**DE-A-1 942 518**
**DE-A-2 437 576**

(73) Patentinhaber: **METALLGESELLSCHAFT AG,
Reuterweg 14 Postfach 3724, D-6000 Frankfurt/M.1
(DE)**

(72) Erfinder: **Doerges, Alexander, Dr., Ziegenhainer
Strasse 95, D-6000 Frankfurt am Main 50 (DE)**
Erfinder: **Schlauer, Johann, Zwischenstrasse 11,
D-6000 Frankfurt am Main 70 (DE)**
Erfinder: **Kriebel, Manfred, Dr., Tiroler Strasse 61,
D-6000 Frankfurt am Main 70 (DE)**
Erfinder: **Hude, Anton, Dr., Siesmayerstrasse 5,
D-6000 Frankfurt am Main 1 (DE)**

(74) Vertreter: **Rieger, Harald, Reuterweg 14, D-6000
Frankfurt a.M. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren zum Regenerieren einer beladenen Absorptionslösung, die aus der Entschwefelung von $H_2S$- und $CO_2$-haltigem, sowie gegebenenfalls auch COS enthaltendem Gas kommt und mindestens ein leichtflüchtiges, sekundäres Amin in einem organischen Lösungsmittel enthält, durch Entspannen und Dampfstrippen.

Wenn im Kreislauf zwischen Absorption und Regeneration geführte Absorptionslösungen ein oder mehrerere leichtflüchtige sekundäre Amine in einem organischen Lösungsmittel enthalten, müssen sie sehr gut regeneriert werden, um damit die zu reinigenden Gase weitgehend entschwefeln zu können. Dies ist bei der Verwendung dieser Gase zu Synthesen zum Schutz von schwefelempfindlichen Katalysatoren erforderlich.

Gemäß dem Stande der Technik ist für die Regeneration ein erheblicher Wärme- und damit Energieaufwand erforderlich (DE-C-18 15 137). Ferner wird verlangt, daß die Abgase aus der Regeneration das $H_2S$ und gegebenenfalls COS zusammen in möglichst konzentrierter Form enthalten und daß ein anfallendes $CO_2$-haltiges Abgas nur geringe Konzentrationen an diesen Schwefelverbindungen enthält.

Der Erfindung liegt die Aufgabe zugrunde, ein Verfahren zu entwickeln, das diese Forderungen erfüllt und den Wärme- und Energieaufwand für die Regeneration solcher Absorptionslösungen niedrig hält.

Diese Aufgabe wird erfindungsgemäß durch die Verfahrensschritte des Kennzeichens des Patentanspruchs 1 gelöst.

Die Arbeitsweise nach der Erfindung hat den Vorteil, daß man die Eignung der leichtflüchtigen sekundären Amine zur selektiven Bindung von $H_2S$ und gegebenenfalls COS aus $CO_2$-haltigen Gasen mehrfach ausnutzen kann. Die aus den Dämpfen der Regenerierkolonne gebildeten Kondensate enthalten nämlich reichliche Mengen der leichtflüchtigen Amine, die bevorzugt an $H_2S$ und COS gebunden sind. Infolgedessen ist das Mengenverhältnis $H_2S$: $CO_2$ bzw. COS: $CO_2$ in diesen Kondensaten erheblich größer als in den Dämpfen, aus denen die Kondensate gebildet wurden. Verdampft oder strippt man also diese Kondensate wieder, dann kann man dadurch eine erhebliche Konzentrierung der Schwefelverbindungen in der Gasphase aus dem Regenerator erreichen. Durch die kombinierte Arbeitsweise mit dem Reabsorber kann man ein aus $CO_2$, $H_2S$ und gegebenenfalls COS bestehendes Abtriebsgemisch, wie es ursprünglich aus der Entschwefelung eines $H_2S$-, COS- und $CO_2$-haltigen Gases anfällt, leicht in einen hauptsächlich aus $H_2S$ und COS mit z.B. 80 Vol.% $H_2S$ bestehenden Gasstrom und einen zweiten Abgasstrom, welcher nur aus $CO_2$ mit geringen Anteilen an $H_2S$ und COS besteht, zerlegen. Der $H_2S$-Strom kann z.B. in einer Claus-Anlage zu Schwefel verarbeitet werden, während das $CO_2$-Abgas dem Abgas der Claus-Anlage zugemischt werden kann. Insgesamt läßt sich dadurch der Umsetzungsgrad der Schwefelverbindungen zu Schwefel, d.h. die Schwefelausbeute, erheblich verbessern und die Umweltbelastung durch die schwefelhaltigen Abgase vermindern.

Nach einer Weiterbildung der Erfindung führt man der Regeneriervorrichtung gemäß Patentanspruch 2 $CO_2$-haltige Absorptionslösung und/oder $CO_2$-haltiges Gas zu und regelt die indirekte Beheizung so, daß in der regenerierten Absorptionslösung das zugeführte $CO_2$ nicht mehr enthalten ist.

Durch diese Maßnahme wird der Wärmebedarf für die Regeneration vermindert. Es wurde nämlich gefunden, daß entsprechend dem Partialdruck von $CO_2$ in der Gasphase durch die Anwesenheit von gelöstem $CO_2$ in der Absorptionslösung die Partialdrücke des chemisch gebundenen $H_2S$ und/oder des COS ganz erheblich erhöht werden, weil diese Schwefelverbindungen durch das $CO_2$ aus ihrer chemischen Bindung verdrängt werden können. Um also beim Regenerieren diese Schwefelverbindungen sehr weitgehend aus der Lösung auszutreiben, muß man dafür sorgen, daß noch genügend $CO_2$ gelöst ist. Natürlich muß das der Regeneriervorrichtung zugeführte $CO_2$ frei von Schwefelverbindungen, insbesondere $H_2S$ und COS sein oder zumindest nur sehr kleine Gehalte an Schwefelverbindungen aufweisen.

Vorteilhafterweise führt man die $CO_2$-haltige Absorptionslösung und/oder das $CO_2$-haltige Gas mit einem solchen $CO_2$-Partialdruck bei Regeneriertemperatur zu, daß die noch nicht vollständig regenerierte Absorptionslösung oberhalb der Zuführung mindestens 0,1 Mol $CO_2$ pro Mol Amin enthält. Dadurch wird sichergestellt, daß auch unterhalb der $CO_2$-Zuführung noch $CO_2$ in der Lösung enthalten ist und den Abtrieb der Schwefelverbindungen begünstigt. Natürlich muß man dazu die $CO_2$-Gleichgewichts-Partialdrücke der Absorptionslösung kennen.

Das für diese Feinregenerierung benötigte $CO_2$ erhält man in vorteilhafter Weise dadurch, daß man mindestens einen kleinen Teilstrom der Absorptionslösung aus dem Oberteil des Reabsorbers abzieht. Diese Absorptionslösung ist stark mit $CO_2$ beladen und enthält nur wenig $H_2S$ und/oder COS. In der Regeneriervorrichtung vermischt sie sich mit der zu regenerierenden Absorptionslösung, und das $CO_2$ ebenso wie noch gelöstes $H_2S$ und/oder COS werden im Verlauf der Regeneration ausgetrieben.

Es ist möglich, auch andere $CO_2$-haltige geeignete Lösungen oder Gase für diesen Zweck zu benutzen, z.B. einen Teilstrom der Absorptionslösung aus dem Oberteil des Absorbers für die Entschwefelung des Gases. Es ist aber in diesem Falle erwünscht, möglichst wenig $CO_2$ zu verwenden, da es die Abgasmenge der Anlage vergrößert. Wenn man gemäß der Erfindung einen Teilstrom der Absorptionslösung aus dem Oberteil des Reabsorbers verwendet, wird dadurch die Abgasmenge nicht verändert, da

das $CO_2$ nur einen zusätzlichen Kreislauf durchläuft. Eine erhöhte Belastung der Umwelt wird also vermieden, unabhängig von der der Regeneriervorrichtung zusätzlich zugeführten $CO_2$-Menge.

Es ist günstig, daß für die Beaufschlagung zum Kopf des Reabsorbers ein Teilstrom der regenerierten Absorptionslösung aus der Regeneriervorrichtung verwendet wird. Diese Lösung ist besonders arm an Schwefelverbindungen und nimmt auch im Oberteil des Reabsorbers nur wenig von diesen Verbindungen, aber viel $CO_2$ auf. Sie ist dann für die Einführung von zusätzlichem $CO_2$ in die Regeneriervorrichtung besonders geeignet.

Die in dieser Weise regenerierte Absorptionslösung ist so weitgehend von $H_2S$ und gegebenenfalls COS befreit, daß man sie auch ohne Kühlung im Absorber zur Entschwefelung verwenden kann. Man kann somit auch heiße Gase selektiv entschwefeln. Insbesondere gilt dies für Absorptionslösungen mit Diäthylamin als leichtflüchtigem, sekundärem Amin. Dies ist überraschend, denn bislang war man der Ansicht, daß die Flüchtigkeit und die Regenerierbarkeit bei Siedetemperatur von z.B. 80 °C eine Anwendung solcher Absorptionslösungen für die Absorption bei erhöhter Temperatur von z.B. 60 °C oder gar 80 °C ausschließe. Es hat sich aber überraschenderweise gezeigt, daß insbesondere Diäthylamin, aber auch andere flüchtige sekundäre Amine bei höherer Temperatur (z.B. 60 °C) eine noch bessere Selektivität für COS gegenüber $CO_2$ aufweisen als bei normaler Temperatur (z.B. 20 °C), ohne daß die mögliche COS-Beladung der Absorptionslösung nennenswert abnimmt, also bei etwa gleicher Umlaufmenge an Absorptionslösung, bezogen auf die gleiche zu entschwefelnde Gasmenge. Man kann demnach bei erhöhter Temperatur, ohne Kühlung der regenerierten Absorptionslösung, ebensoviel COS bei geringerer $CO_2$-Aufnahme auswaschen. Voraussetzung ist aber eine vollständige Regeneration, wie man sie gemäß der Erfindung erreichen kann.

Um die allerletzten Restgehalte an $H_2S$ in der regenerierten Lösung vor der Anwendung zur selektiven Gasentschwefelung zu entfernen, kann man noch eine oxidierende Behandlung der Lösung durchführen, indem man sie z.B. mit einem Gas in Berührung bringt, welches Sauerstoff in geringer Konzentration enthält. Die $H_2S$-haltige Lösung nimmt den Sauerstoff begierig auf, wobei gelöster Elementarschwefel oder Polysulfide entstehen. Die so behandelte Lösung hat keinen meßbaren $H_2S$-Partialdruck mehr und ist für die restlose Entschwefelung von $H_2S$-, COS- und $CO_2$-haltigen Gasen geeignet.

Nach einer weiteren Ausgestaltung der Erfindung kann man das sauerstoffhaltige Gas leicht erhalten, indem man dem bereits erwähnten, der Regeneriervorrichtung zuzuführenden $CO_2$ einen kleinen Anteil Luft zumischt, z.B. 0,01 Vol.%, so daß sich ein Sauerstoffgehalt von 0,002 Vol.% $O_2$ im $CO_2$

ergibt. Da nur wenige mg $H_2S$ pro Liter Lösung zu oxidieren sind, reicht das für die vollständige Beseitigung des Schwefelwasserstoffs in der regenerierten Lösung aus. Natürlich kann man die oxidierende Behandlung auch auf andere Weise durchführen, etwa indem man die noch $H_2S$-haltige Lösung mit Stickstoff in Berührung bringt, der noch geringe Anteile an Sauerstoff enthält, oder indem man frische Lösung zusetzt, die mit Luftsauerstoff gesättigt wurde.

Zweckmäßig führt man das lufthaltige $CO_2$ der Regeneriervorrichtung unterhalb des Seitenauslasses und oberhalb der Einführung der durch die Beheizung entwickelten Dämpfe zu und regelt die Beheizung so, daß in der ablaufenden Absorptionslösung das zugeführte $CO_2$ nicht mehr enthalten ist.

Die beim erfindungsgemäßen Verfahren eingesetzten Absorptionslösungen können als organisches Lösungsmittel Methanol oder einen anderen einwertigen Alkohol enthalten. Weitere bevorzugte Absorptionslösungen können als organisches Lösungsmittel N-Methylpyrrolidon, N-Methyl-ε-Caprolactam oder ein anderes N-alkyliertes Lactam enthalten. Geeignet sind auch Absorptionslösungen, die als organisches Lösungsmittel einen oder mehrere alkylierte Polyethylenglykolether enthalten, z.B. Tetraethylenglykoldimethylether. Schließlich ist auch Tetrahydrothiophen-1,1-dioxid als organisches Lösungsmittel in solchen Absorptionslosungen verwendbar.

Als leichtflüchtige sekundäre Amine werden gemäß der Erfindung bevorzugt Diäthylamin, Diisopropylamin, Methylisopropylamin, Äthylisopropylamin, Dipropylamin, Methyl-n-Butylamin, Methyl-i-Butylamin, Methyl-s-Butylamin allein oder in Mischung untereinander verwendet.

Das Verfahren gemäß der Erfindung ergibt eine besonders wirksame Regenerierung für die selektive Entfernung von $H_2S$ und COS aus $H_2S$-, COS- und $CO_2$-haltigen Gasen bei gleichzeitiger Aufkonzentrierung der Schwefelverbindungen in einem für die Verarbeitung z.B. auf Elementarschwefel in einer Claus-Anlage geeigneten Abgas. Manchmal, z.B. wenn das Verhältnis H S:$CO_2$ im zu entschwefelnden Gas bereits hoch ist, werden geringere Anforderungen an die Aufkonzentrierung für das $H_2S$-Abgas gestellt. Dann kann man die Arbeitsweise vereinfachen, indem man den Reabsorber nicht mit einem Seitenabzug aus der Regeneriervorrichtung beschickt, sondern mit einem Teilstrom des gekühlten Kopfgases, und auf den Seitenabzug ganz verzichtet. Auch mit dieser vereinfachten Arbeitsweise bleibt man im Rahmen der Erfindung.

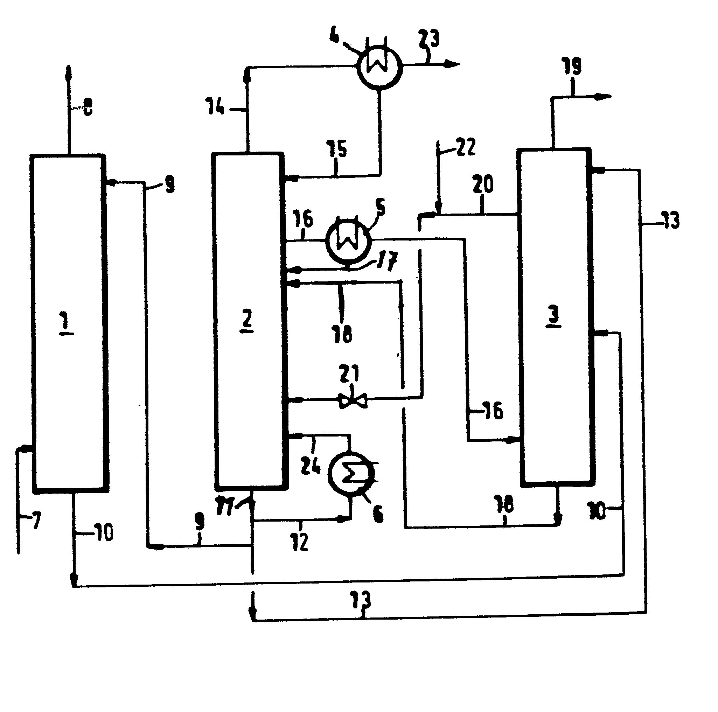

Die Erfindung ist anhand der Zeichnung schematisch und beispielsweise dargestellt. Die Figur enthält nur die wichtigsten, zur Durchführung des Verfahrens benötigten Apparate und Leitungen. Teile und Einrichtungen zur Förderung, Regelung und Messung sind fortgelassen.

Die dargestellte Anlage besteht aus dem Absorber $\underline{1}$, der Regeneriervorrichtung $\underline{2}$, dem Reabsorber $\underline{3}$, den Kühlern $\underline{4}$ und $\underline{5}$ und der Heizvorrichtung $\underline{6}$. Durch die Leitung $\underline{7}$ wird dem als Boden, kolonne ausgebildeten Absorber $\underline{1}$ ein unter Druck stehendes, selektiv zu entschwefelndes, $H_2S$- und $CO_2$-haltiges Gas zugeführt. Das entschwefelte Gas wird durch die Leitung $\underline{8}$ abgeführt. Die Absorptionslösung wird dem Absorber $\underline{1}$ durch die Leitung $\underline{9}$ zugeführt und läuft durch die Leitung $\underline{10}$ wieder ab. Die Menge der Absorptionslösung wird so bemessen, daß das $H_2S$ aus dem Gas völlig ausgewaschen wird, während nur ein Teil des $CO_2$ absorbiert wird und der übrige Teil des $CO_2$ im durch die Leitung $\underline{8}$ austretenden entschwefelten Gas verbleibt.

Die Regeneration der mit $H_2S$ und $CO_2$ beladenen Absorptionslösung erfolgt in der annähernd bei Atmosphärendruck oder bei etwas erhöhtem Druck betriebenen, als Bodenkolonne ausgebildeten Regeneriervorrichtung $\underline{2}$. Bevor die Lösung aber dorthin gelangt, wird sie in den bei ähnlichem Druck betriebenen, als Bodenkolonne ausgebildeten Reabsorber $\underline{3}$ entspannt und zur Rückwaschung von $H_2S$ aus dem durch die Leitung $\underline{16}$ eintretenden Gas benutzt. Im Oberteil des Reabsorbers $\underline{3}$ wird regenerierte Lösung durch die Leitung $\underline{13}$ aufgegeben, um das im Reabsorber aufsteigende, hauptsächlich aus $CO_2$ bestehende Gas von $H_2S$ zu befreien. Durch die Leitung $\underline{19}$ entweicht praktisch nur $CO_2$. Somit ist das gesamte, mit dem $CO_2$ durch die Leitung $\underline{16}$ zugeführte $H_2S$ im Reabsorber $\underline{3}$ durch die aus den Leitungen $\underline{10}$ und $\underline{13}$ zugeführte Absorptionslösung reabsorbiert worden und ist im Ablauf durch die Leitung $\underline{18}$ enthalten. Der $H_2S$-Gehalt der Lösung ist erheblich höher als in der durch die Leitung $\underline{10}$ zugeführten Absorptionslösung, ihr $CO_2$-Gehalt ist kleiner.

Durch die Leitung $\underline{18}$ gelangt die $H_2S$-reiche Absorptionslösung in die Regeneriervorrichtung $\underline{2}$, die im unteren Teil mittels der mit Dampf indirekt beheizten Vorrichtung $\underline{6}$ durch aufsteigende Dämpfe beaufschlagt wird, die aus der durch die Leitungen $\underline{11}$, $\underline{12}$ und $\underline{24}$ zirkulierenden Absorptionslösung erzeugt werden. Durch die aufsteigenden Dämpfe werden die in der der Regeneriervorrichtung zugeführten Absorptionslösung enthaltenen gelösten Gase $H_2S$ und $CO_2$ ausgetrieben. Durch die Leitung $\underline{16}$ wird 1 bis 10 Böden unterhalb des Austritts der Kopfdämpfe und der Aufgabe des Kondensats durch Leitung $\underline{15}$ ein Seiten-Teilstrom der Dämpfe und Gase abgezogen und im Kühler $\underline{5}$ durch Kühlung auf Umgebungstemperatur die Hauptmenge der Dämpfe kondensiert. Im Kondensat lösen sich auch $CO_2$ und besonders $H_2S$ in erheblicher Menge. Dieses Kondensat wird durch die Leitung $\underline{17}$ wieder in die Regeneriervorrichtung $\underline{2}$ zurückgeführt, und zwar 1 bis 10 Böden oberhalb des Zulaufs der Absorptionslösung aus Leitung $\underline{18}$. Dadurch wird dieses Kondensat ebenso wie das durch die Leitung $\underline{15}$ zurückkehrende Kondensat von $H_2S$ und $CO_2$ gestrippt und der $H_2S$-Gehalt der

Dämpfe erhöht. Die nichtkondensierten, aus $H_2S$ und $CO_2$ bestehenden Gase des Seiten-Teilstroms werden durch die Leitung $\underline{16}$ zum Reabsorber $\underline{3}$ geführt. Hier wird das $H_2S$ durch die Absorptionslösung reabsorbiert und verdrängt dabei einen Teil des $CO_2$ aus der Lösung. Das $H_2S$ beschreibt also einen Kreislauf zwischen Regeneriervorrichtung $\underline{2}$ und Reabsorber $\underline{3}$ und reichert sich dabei stark an, während das durch die Leitung $\underline{16}$ ankommende $CO_2$ im Reabsorber nicht absorbiert wird und im Auslaß $\underline{19}$ erscheint.

Die durch die Leitung $\underline{14}$ abziehenden Kopfdämpfe aus der Regeneriervorrichtung $\underline{2}$ werden im Kühler $\underline{4}$ etwa auf Umgebungstemperatur gekühlt. Das dabei anfallende Kondensat wird abgetrennt und durch die Leitung $\underline{15}$ auf den Kopf der Regeneriervorrichtung aufgegeben. Das gekühlte Gas wird durch die Leitung $\underline{23}$ abgezogen. Je kleiner man die durch die Leitung $\underline{23}$ abziehende Gasmenge hält, um so größer wird der $H_2S$-Gehalt dieses Gases, z.B. über 80 Vol.-%. Es kann in einer Claus-Anlage zu Elementarschwefel verarbeitet werden.

Um den Beheizungsaufwand in der Heizvorrichtung $\underline{6}$ zu senken und den $H_2S$-Gehalt des entschwefelten Gases aus dem Absorber (Leitung $\underline{8}$) noch weiter zu vermindern, kann man das Ventil $\underline{21}$ in der Leitung $\underline{20}$ vom Oberteil des Reabsorbers $\underline{3}$ zur Regeneriervorrichtung $\underline{2}$ öffnen und $CO_2$-haltige Absorptionslösung und/oder $CO_2$-haltiges Gas in der benötigten Menge und/oder mit dem benötigten $CO_2$-Partialdruck der Regeneriervorrichtung $\underline{2}$ unterhalb des Seitenabzuges $\underline{16}$, aber oberhalb der Einführung $\underline{24}$ der durch die Beheizung entwickelten Dämpfe zuführen. Damit kann man $H_2S$ aus der zu regenerierenden Lösung verdrängen und so die Regenerierung vervollständigen.

Noch besser kann man etwaige Restgehalte an $H_2S$ in der Lösung durch eine oxidierende Behandlung entfernen. Z.B. kann man bei Verwendung von $CO_2$-Gas in der Leitung $\underline{20}$ durch die Leitung $\underline{22}$ eine begrenzte Menge Luft zumischen, so daß das $CO_2$ etwa 20 Vol.-ppm (Teile pro Million) Sauerstoff enthält. Der Sauerstoff wird im Unterteil der Regeneriervorrichtung 2 von der schon weitgehend regenerierten Lösung aufgenommen und oxidiert das restliche $H_2S$ dieser Lösung. Die so regenerierte Lösung ist geeignet, im Absorber $\underline{1}$ ein entschwefeltes Gas mit weniger als 0,1 ppm $H_2S$ zu erhalten, ohne das $CO_2$ völlig aus dem Gas auszuwaschen. Dies ist z.B. für ein Synthesegas für die Methanolsynthese sehr erwünscht.

Eine Kühlung der regenerierten Lösung vor Aufgabe auf den Absorber oder den Reabsorber ist nicht in jedem Falle erforderlich. Man kann mit der nichtgekühlten Lösung, also bei höherer Temperatur, erreichen, daß weniger $CO_2$ ausgewaschen und die Selektivität für die Schwefelverbindungen noch mehr verbessert wird.

## Patentansprüche

1. Verfahren zum Regenerieren einer beladenen Absorptionslösung, die aus der Entschwefelung von $H_2S$- und $CO_2$-haltigem, sowie gegebenenfalls auch COS enthaltendem Gas kommt und mindestens ein leichtflüchtiges, sekundäres Amin in einem organischen Lösungsmittel enthält, durch Entspannen und Dampfstrippen, dadurch gekennzeichnet, daß man

A) die beladene, $H_2S$-, $CO_2$- und gegebenenfalls COS-haltige Absorptionslösung aus der Entschwefelung einem Reabsorber (3) durch einen ersten Einlaß (Leitung (10)) unter Entspannung aufgibt, wobei der Reabsorber als Bodenkolonne ausgebildet ist und einen niedrigeren Druck als die Entschwefelung aufweist, daß man regenerierte Absorptionslösung in das Oberteil des Reabsorbers oberhalb des ersten Einlasses leitet (Leitung (13)), daß man ein $CO_2$-/ und $H_2S$-haltiges erstes Gas dem Reabsorber unterhalb des ersten Einlasses zuführt (Leitung (16)), wobei man das im Reabsorber aufsteigende Gas im Gegenstrom mit den oberhalb zugeführten Lösungen in direkten Kontakt bringt, daß man am Kopf des Reabsorbers ein $CO_2$-reiches Gas abzieht (Leitung (19)) und vom Boden des Reabsorbers eine Bodenlösung ableitet (Leitung 18)), deren $H_2S$-Gehalt höher als in der beladenen Absorptionslösung ist,

B) daß man die aus dem Reabsorber (3) kommende Bodenlösung (Leitung (18)) auf den oberen Teil einer Regeneriervorrichtung (2) aufgibt, wobei die Regeneriervorrichtung als Bodenkolonne mit indirekter Beheizung im unteren Bereich zum Erzeugen aufsteigender Dämpfe ausgebildet ist, daß man die Kopfdämpfe der Regeneriervorrichtung (Leitung (14)) etwa auf Umgebungstemperatur kühlt, das dabei anfallende Kondensat (Leitung (15)) abtrennt und wieder dem Kopf der Regeneriervorrichtung aufgibt und das verbleibende $H_2S$-reiche Gas abführt (Leitung (23)), daß man 1 bis 10 Böden unterhalb des Austritts der Kopfdämpfe und der Aufgabe des Kondensats einen Teil der Dämpfe durch einen Seitenauslaß (Leitung (16)) aus der Regeneriervorrichtung abzieht, etwa auf Umgebungstemperatur kühlt, das dabei anfallende Kondensat (Leitung (17)) 1 bis 10 Böden oberhalb der Aufgabestelle der Bodenlösung in die Regeneriervorrichtung leitet und das verbleibende Gas als $CO_2$- und $H_2S$-haltiges erstes Gas dem Reabsorber zuführt, und daß man vom Boden der Regeneriervorrichtung regenerierte Absorptionslösung abzieht (Leitung (11)), einen Teilstrom davon (Leitung (9)) zur Entschwefelung verwendet und einen weiteren Teilstrom (Leitung (10)) in den Reabsorber leitet.

2. Verfahren nach Anspruch 1, dadurch gekennzeichnet, daß man der Regeneriervorrichtung unterhalb des Seitenauslasses und oberhalb einer Einführung der durch die indirekte Beheizung entwickelten Dämpfe $CO_2$-haltige Absorptionslösung und/oder $CO_2$-haltiges Gas zuführt und die Beheizung so regelt, daß in der vom Boden der Regeneriervorrichtung abgezogenen regenerierten Absorptionslösung das zugeführte $CO_2$ nicht mehr enthalten ist.

3. Verfahren nach Anspruch 2, dadurch gekennzeichnet, daß man die $CO_2$-haltige Absorptionslösung und/oder das $CO_2$-haltige Gas mit einem solchen $CO_2$-Partialdruck bei Regeneriertemperatur zuführt, daß die noch nicht vollständig regenerierte Absorptionslösung oberhalb der Zuführung mindestens 0,1 Mol $CO_2$ pro Mol Amin enthält.

4. Verfahren nach Anspruch 2 oder 3, dadurch gekennzeichnet, daß man die $CO_2$-haltige Absorptionslösung und/ oder das $CO_2$-haltige Gas erhält, indem man aus dem Oberteil des Reabsorbers mindestens einen Teilstrom abzieht und dafür verwendet.

5. Verfahren nach einem der Ansprüche 1 bis 4, dadurch gekennzeichnet, daß man einen Restgehalt an $H_2S$ in der regenerierten Absorptionslösung durch eine oxidierende Behandlung entfernt.

6. Verfahren nach Anspruch 5, dadurch gekennzeichnet, daß man für die oxidierende Behandlung ein sauerstoffhaltiges Gas verwendet.

7. Verfahren nach Anspruch 2 oder 6, dadurch gekennzeichnet, daß man dem der Regeneriervorrichtung zuzuführenden $CO_2$-haltigen Gas Luft zumischt.

8. Verfahren nach einem der vorhergehenden Ansprüche 1 bis 5, dadurch gekennzeichnet, daß man die regenerierte Absorptionslösung aus der Regeneriervorrichtung ohne Kühlung zur Entschwefelung verwendet.

9. Verfahren nach Anspruch 1 oder einem der folgenden, dadurch gekennzeichnet, daß die Absorptionslösung als organisches Lösungsmittel Methanol oder einen anderen einwertigen Alkohol enthält.

10. Verfahren nach Anspruch 1 oder einem der folgenden, dadurch gekennzeichnet, daß die Absorptionslösung als organisches Lösungsmittel N-Methylpyrrolidon, N-Methyl-ε-Caprolactam oder ein anderes N-alkyliertes Lactam enthält.

11. Verfahren nach Anspruch 1 oder einem der folgenden, dadurch gekennzeichnet, daß die Absorptionslösung als organisches Lösungsmittel einen oder mehrere alkylierte Polyethylenglykolether enthält.

12. Verfahren nach Anspruch 1 oder einem der folgenden, dadurch gekennzeichnet, daß die Absorptionslösung als organisches Lösungsmittel Tetrahydrothiophen-1,1-dioxid enthält.

13. Verfahren nach Anspruch 1, dadurch gekennzeichnet, daß als sekundäres Amin Diäthylamin, Diisopropylamin, Methylisopropylamin, Äthylisopropylamin, Dipropylamin, Methyl-n-Butylamin, Methyl-i-Butylamin, Methyl-s-Butylamin allein oder in Mischung untereinander verwendet werden.

## Claims

1. A process of regenerating a laden absorbent solution which contains at least one readily volatile secondary amine in an organic solvent and has been used to desulphurize a gas which contains $H_2S$ and $CO_2$ and possibly also COS, said process comprising pressure-relieving and stripping with vapours, characterized in that

A) the laden absorbent solution which contains $H_2S$, $CO_2$ and possibly COS coming from the desulphurizer is supplied (line 10) with a presaure relief to a reabaorber (3) through a first inlet, which reabsorber consists of a plate column and is operated under a lower pressure than the desulphurizer, regenerated absorbent solution is supplied (line 13) to the upper portion of the reabsorber below the first inlet, a first gas which contains $CO_2$ and $H_2S$ is supplied (line 6) to the reabsorber below the first inlet, the gas rising in the reabsorber is directly contacted in countercurrent operation with the solutions supplied on higher levels, a $CO_2$-enriched gas is withdrawn (line 19) at the top of the reabsorber and a bottom solution having a higher $H_2S$ content than the laden absorbent solution is withdrawn (line 18) from the bottom of the reabsorber.

B) The bottom solution (line 18) coming from the reabsorber (3) is supplied to the upper portion of a regenerator (2), which consists of a plate column, which in its lower portion is indirectly heated to produce rising vapours, the overhead vapours of the regenerator (line 14) are cooled approximately to the ambient temperature, the resulting condensate (line 15) is separated and recycled to the top of the regenerator, the remaining $H_2S$-enriched gas is withdrawn (line 16) in part from the regenerator through a side outlet on a level which is 1 to 10 plates below the outlet for the overhead vapours and the inlet for the condensate, said withdrawn vapours are cooled approximately to ambient temperature, the resulting condensate is fed (line 17) into the regenerator on a level which is 1 to 10 plates below the inlet for the bottom solution, the remaining gas is supplied to the reabsorber as the first gas which contains $CO_2$ nad $H_2S$, regenerated absorbent solution is withdrawn (line 11) from the bottom of the regenerator, one partial stream (line 9) of said regenerated solution is used for desulphurization and another partial stream is supplied (line 13) to the reabsorber.

2. A process according to claim 1, characterized in that the regenerator is supplied with $CO_2$-containing absorbent solution and/or $CO_2$-containing gas below the side outlet or above an inlet for the vapours which have been developed by the indirect heating and the heating is so controlled that the supplied $CO_2$ is no longer contained in the regenerated absorbent solution which is withdrawn from the bottom of the regenerator.

3. A process according to claim 2, characterized in that the $CO_2$-containing absorbent solution and/or the $CO_2$-containing gas as supplied have such a $CO_2$ partial pressure at the regenerating temperature that the absorbent solution which is disposed above the inlet and has not yet been fully regenerated contains at least 0.1 mole $CO_2$ per mole amine.

4. A proceas according to claim 2 or 3, characterized in that the $CO_2$-containing absorbent solution and/or the $CO_2$-containing gas is obtained in that at least a partial stream is withdrawn from the upper portion of the reabsorber and is used for that purpose.

5. A process according to any of claims 1 to 4, characterized in that a residual $H_2S$ content is removed from the regenerated absorbent solution by an oxidizing treatment.

6. A process according to claim 5, characterized in that an oxygen-containing gas is used for the oxidizing treatment.

7. A process according to claim 2 or 6, characterized in that air is admixed to the $CO_2$-containing gas which is to be supplied to the regenerator.

8. A process according to any of the preceding claims 1 to 5, characterized in that the regenerated absorbent solution from the regenerator is supplied to the desulphurizer without being cooled.

9. A process according to claim 1 or any of the following claims, characterized in that absorbent solution contains methanol or another monohydric alcohol as a solvent.

10. A process according to claim 1 or any of the following solutions, characterized in that the absorbent solution contains N-methylpyrrolidone, N-methyl-epsilon-caprolactam or another N-alkylated lactam as an organic solvent.

11. A process according to claim 1 or any of the following claims, characterized in that the absorbent solution contains one or more alkylated polyethyleneglycol ethers as an organic solvent.

12. A process according to claim 1 or any of the following claims, characterized in that the absorbent solution contains tetrahydrothiophen-1, 1-dioxide as an organic solvent.

13. A process according to claim 1, characterized in that diethylamine, diisopropylamine, methyl isopropylamine, ethyl isopropylamine, dipropylamine, methyl-n-butylamine, methyl-i-butylamine, methyl-s-butylamine are used individually or in a mixture with each other.

## Revendications

1. Procédé de régénération d'une solution d'absorption chargée qui provient de la désulfuration de gaz contenant $H_2S$ et $CO_2$ ainsi que, le cas échéant, également COS, et au moins une amine secondaire très volatile dans un solvant organique, par détente et entraînement à la vapeur, caractérisé en ce que,

A) on envoie, avec détente, la solution d'absorption chargée contenant $H_2S$, $CO_2$ et, le

cas échéant, COS, de la désulfuration à un réabsorbeur (3) en passant par une première entrée (conduit 10), le réabsorbeur étant agencé en colonne à plateaux et présentant une pression inférieure à celle de la désulfuration, on envoie (conduit 13) la solution d'absorption régénérée à la partie supérieure du réabsorbeur au-dessus de la première entrée, on amène (conduit 16) au réabsorbeur, en-dessous de la première entrée, un premier gaz contenant $CO_2$ et $H_2S$, en mettant le gaz ascendant dans le réabsorbeur en contact direct à contre-courant avec les solutions amenées au-dessus, on retire (conduit 19) en tête du réabsorbeur un gaz riche en $CO_2$ et on soutire (conduit 18) du fond du réabsorbeur une solution de queue, dont la teneur en $H_2S$ est supérieure à celle de la solution d'absorption chargée,

B) on envoie la solution de queue (18) provenant du réabsorbeur (3) à la partie supérieure d'un dispositif de régénération (2), le dispositif de régénération étant agencé en colonne à plateaux avec chauffage indirect dans la région inférieure, pour obtenir des vapeurs ascendantes, on refroidit les vapeurs de tête du dispositif de régénération (conduit 14) à peu près à la température ambiante, on sépare le produit condensé (conduit 15) qui se produit et on le retourne en tête du dispositif de régénération et on évacue (conduit 23) le gaz restant riche en $H_2S$, on retire du dispositif de régénération, 1 à 10 plateaux en-dessous de la sortie des vapeurs de tête et de l'entrée du produit condensé, une partie des vapeurs, par une sortie latérale, (conduit 16), on la refroidit à peu près à la température ambiante, on envoie le produit condensé (conduit 17) se produisant ainsi 1 à 10 plateaux au-dessus de l'emplacement d'entrée de la solution de queue dans le dispositif de régénération, et on envoie le gaz restant au réabsorbeur à titre de premier gaz contenant du $CO_2$ et de l'$H_2S$, et on soutire du fond du dispositif de régénération une solution d'absorption régénérée dont on utilise une partie (conduit 9) pour la désulfuration, et dont on envoie une autre partie (conduit 10) au réabsorbeur.

2. Procédé suivant la revendication 1, caractérise en ce qu'on envoie, au dispositif de régénération, en-dessous de la sortie latérale et au-dessus d'une introduction des vapeurs dégagées par le chauffage indirect, une solution d'absorption contenant du $CO_2$ et/ou du gaz contenant du $CO_2$ et on règle le chauffage de manière à ce que le $CO_2$ amené ne soit plus contenu dans la solution d'absorption régénérée soutirée du bas du dispositif de régénération.

3. Procédé suivant la revendication 2, caractérisé en ce que l'on envoie la solution d'absorption contenant du $CO_2$ et/ou le gaz contenant du $CO_2$ avec une pression partielle de $CO_2$ telle à la température de régénération que la solution d'absorption, qui n'est pas encore entièrement régénérée, contienne, au-dessus de l'entrée, au moins 0,1 mole de $CO_2$ par mole d'amine.

4. Procédé suivant la revendication 2 ou 3, caractérisé en ce que l'on obtient la solution d'absorption contenant du $CO_2$ et/ou le gaz contenant du $CO_2$ en soutirant au moins un courant partiel de la partie supérieure du réabsorbeur et en l'utilisant à cet effet.

5. Procédé suivant l'une des revendications 1 à 4, caractérisé en ce que l'on élimine, par un traitement oxydant, une teneur résiduelle en $H_2S$ de la solution d'absorption régénérée.

6. Procédé suivant la revendication 5, caractérisé en ce qu'on utilise pour le traitement oxydant un gaz contenant de l'oxygène.

7. Procédé suivant la revendication 2 ou 6, caractérisé en ce qu'on mélange de l'air au gaz contenant du $CO_2$ envoyé au dispositif de régénération.

8. Procédé suivant l'une des revendications précédentes 1 à 5, caractérisé en ce que l'on utilise la solution d'absorption régénérée provenant du dispositif de régénération sans refroidissement pour la désulfuration.

9. Procédé suivant la revendication 1 ou l'une des suivantes, caractérisé en ce que la solution d'absorption contient, comme solvant organique du méthanol ou un autre monoalcool.

10. Procédé suivant la revendication 1 ou l'une des suivantes, caractérisé en ce que la solution d'absorption contient, comme solvant organique, de la N-méthylpyrrolidone, du N-méthyl-ε-caprolactame ou un autre lactame alcoylé sur l'azote.

11. Procédé suivant la revendication 1 ou l'une des suivantes, caractérisé en ce que la solution d'absorption contient, comme solvant organique, un ou plusieurs poly(éther éthylèneglycolique) alcoylé.

12. Procédé suivant la revendication 1 ou l'une des suivantes, caractérisé en ce que la solution d'absorption contient, comme solvant organique, du tétrahydrothiophéne-1,1-dioxyde.

13. Procédé suivant la revendication 1, caractérisé en ce qu'on utilise, comme amine secondaire, de la diéthylamine, de la diisopropylamine, de la méthylisopropylamine, de l'éthylisopropylamine, de la dipropylamine, de la méthyl-n-butylamine, de la methyl-i-butylamine, de la méthyl-s-butylamine, seules ou en mélange entre elles.